# EUROPEAN PATENT APPLICATION

(11) **EP 1 860 063 A1**
(43) Date of publication of application: **28.11.2007**
(21) Application number: 06114305.3
(22) Date of filing: 22.05.2006
(51) Int. Cl.: C01B 3/36, C01B 3/38, C01B 3/48, C10G 2/00, C10J 3/46

(54) **Process for preparing a paraffin product**

(71) Applicant: SHELL INTERNATIONALE RESEARCH MAATSCHAPPIJ B.V., 2596 HR Den Haag (NL)
(72) Inventor: Gimpel, Frederik Willem Hendrik, 1031 CM Amsterdam (NL); Grootveld, Gerard, 1031 CM Amsterdam (NL)
(74) Representative: Zeestraten, Albertus W. J.

(57) **Abstract**

The invention relates to a process for preparing a paraffin product from a solid carbonaceous feedstock comprising the following steps, (a) partial oxidation of the solid carbonaceous feedstock to obtain a mixture comprising hydrogen and carbon monoxide, (b) performing a Fischer-Tropsch reaction using the mixture as obtained in step (a) and recovering an off-gas from the Fischer-Tropsch reaction and a paraffin product and (c) preparing a hydrogen comprising gas from the off-gas. Preferably the olefins as present in the off-gas are hydrogenated prior to performing step (c).

## Description

The invention is directed to a process for preparing a paraffin product from a solid carbonaceous feedstock comprising the following steps, (a) partial oxidation of the solid carbonaceous feedstock to obtain a mixture comprising hydrogen and carbon monoxide, (b) performing a Fischer-Tropsch reaction using the mixture as obtained in step (a) and recovering an off-gas from the Fischer-Tropsch reaction.

Such a process is described in WO-A-03/035590 and in WO-A-03/035591. In these publications it is described to recirculate the off-gas, referred to therein as tail gas, back into the Fischer-Tropsch reactor of step (b) or into gasifiers of step (a). Gasifiers produce CO and H₂ for onward reaction in the Fischer-Tropsch reaction. The off-gas will comprise according to one of these publications water, CO₂, CH₄, N₂, unreacted syngas (H₂ and CO) and vapour hydrocarbon products.

Whilst some of the off-gas can be recirculated to the Fischer-Tropsch reactor, recirculation of all of the off-gas to the Fischer-Tropsch reactor causes CO₂, CH₄ and inerts to build up thus reducing the amount of hydrocarbons produced by the Fischer-Tropsch reactor.

Feeding the off-gas back to the gasifiers (which produce the H₂ and CO mixture) results in problems relating to the relative ratio of H₂/CO. Coal Gasifiers typically produce a H₂/CO ratio which is lower than the preferred ratio to perform step (b). Recirculation of off-gas to the gasifiers will even further reduce this ratio.

The third option disclosed in WO03/035590 is to use the off-gas as a fuel for power generation. However, in practice this may not consume all of the available off-gas.

The present invention discloses a process, which makes use of the off-gas in a more efficient manner.

Process for preparing a paraffin product from a solid carbonaceous feedstock comprising the following steps,
(a) partial oxidation of the solid carbonaceous feedstock to obtain a mixture comprising hydrogen and carbon monoxide,
(b) performing a Fischer-Tropsch reaction using the mixture as obtained in step (a) and recovering an off-gas from the Fischer-Tropsch reaction and a paraffin product and
(c) preparing a hydrogen comprising gas from the off-gas.

Applicants found that by performing additional step (c) the off-gas may find use as feedstock to prepare a hydrogen comprising gas product. This is advantageous because in the process to be improved by the present invention additional hydrogen is required in order to either optimise the hydrogen to CO ratio as explained above and/or to further upgrade the products as obtained in step (b) by one or more hydroprocessing steps.

Step (c) may be any process, which can prepare a hydrogen containing mixture. Preferably the process is catalyzed and more preferably it is a reforming process, for example the well known steam reforming processes, especially adiabatic steam reforming, fired steam reforming, and auto thermal steam reforming (ATR). Step (c) and step (a) are separate steps resulting in separate gaseous products. The gaseous products as separately obtained may be combined after performing the separate steps.

Preferably the olefins as present in the off-gas are first hydrogenated prior to performing step (c). For example, when an adiabatic steam reformer is used temperature of the feed to said unit is usually rather high (inlet temperature of around 500 °C) in order to compensate for the low activity of the catalysts used therein. At such temperatures, the presence of CO in the inlet end of the hydrogen manufacturing unit causes coking according to the Boudouard reaction below (1).

2CO → C + CO₂ (1)

Olefins are also known for causing coking of catalysts used in the hydrogen manufacturing unit. Carbon deposition or coking leads to hot spots on the catalyst and consequently reduces their activity. The hot spots are also formed on the reformer reactor tubes, and reduce their lifetime. The carbon deposits can be avoided or mitigated if olefins and preferably CO are removed from the off-gas stream.

Preferably a portion of at least the olefins within an off-gas stream is removed or converted before using the off-gas as a feed in step (c). In addition, the reaction preferably converts the carbon monoxide into methane and/or carbon dioxide, especially by reaction with water under the formation of carbon dioxide and hydrogen.

Preferably also other compounds are removed from the off-gas stream which can result in carbon deposition, for example CO, paraffins heavier than LPG and light naphtha. Thus preferably a portion of the olefins present in said off-gas are hydrogenated. More preferably the carbon monoxide present in said off-gas is removed or converted either prior to, simultaneous with or after the olefin hydrogenation step. Even more preferably substantially all of the carbon monoxide is converted or removed prior to being fed into the reactant side of a hydrogen manufacturing unit.

Typically the carbon monoxide is converted to a species which is not liable to cause carbon deposition, for example carbon dioxide or methane. The carbon monoxide is preferably not converted to a species which is liable to cause carbon deposition, such as carbon. Preferably a catalyst is used which combines olefin hydrogenation activity and CO shift activity. In that way olefins and carbon monoxide are removed, while additional hydrogen is made. Suitable catalyst for this process are copper-containing catalysts, especially Cu/ZnO catalysts.

Preferably the syngas produced by the hydrogen manufacturing unit has a sulphur content of below 1ppm.

Optionally the hydrogenation is achieved in a first reactor using a shift catalyst.

Preferably the hydrogenation is achieved in a first reactor using a catalyst or catalysts selected from the group consisting of copper, especially copper/zinc oxide, nickel, nickel/tungsten, cobalt/molybdenum and sulfided nickel/molybdenum.

Preferably the catalyst is adapted to promote hydrogenation of unsaturated hydrocarbons. Preferably the catalyst is adapted not to promote the hydrogenation of carbon monoxide to methanol. Preferably the catalyst does not contain sulfur. Preferably the catalyst promotes hydrogenation of olefins and promotes conversion of carbon monoxide and water into carbon dioxide and hydrogen. This is especially important for gas streams comprising relatively high amounts of carbon monoxide, especially in combination with relatively high amounts of hydrogen. The use of e.g. nickel and/or cobalt containing catalysts may result in the formation of methane and/or methanol. These reactions are highly exothermic, which may result in high temperature which may damage the catalyst. Thus, copper-based catalyst, e.g. copper/zinc oxide catalyst, are preferred in combination with gas streams comprising more than 5% vol CO, especially more than 10% vol CO, based on the total gas stream. The amount of hydrogen is suitably more than 10% vol, especially more than 20% vol, more especially more than 30% vol.

More preferably hydrogenation may be conducted with a copper based catalyst, especially a Cu/ZnO catalyst. Preferably Mn is added to the Cu/ZnO catalyst to promote hydrogenation. Optionally Cs and/or Ce are added to the catalyst. Typically the Cu/ZnO is prepared by providing CuO/ZnO and reducing the CuO in the reactor prior to hydrogenating a portion of the olefins.

Steam may be added to the first reactor, typically to suppress Boudouard carbon formation.

The temperature of the first reactor is preferably 150-250 °C at the inlet, and preferably 200-500 °C, especially 200-350 °C at the outlet.

In such embodiments, any further removal of CO can optionally be achieved in a separate reactor by use of a high temperature shift catalyst. The temperature range in the second reactor is preferably in the range 300-500°C. Preferably a catalyst adapted for catalysing the shift reaction (CO + H₂O □ CO₂ + H₂) is used in the second reactor. One suitable catalyst would be a Fe/Cr catalyst. Also copper based catalysts may be used, especially copper/zinc oxide. Alternatively nickel/cobalt may be used.

Preferably the second reactor is provided in series with the first reactor and the hydrogen manufacturing unit. First and second reactor may be positioned in any order or combined but preferably the second reactor is downstream of the first reactor and preferably upstream of the hydrogen manufacturing unit.

Alternatively, the hydrogenation may be performed using a pre-reforming catalyst at a temperature suitable to promote hydrogenation of unsaturated molecules, typically hydrocarbons. For this alternative, steam is preferably added. Pre-reforming catalysts include Ni based catalysts, for example Ni on an alumina support may be used. Other options include Pt, Ru, Rh, precious metals or combinations thereof. Preferably the inlet temperature of the reactor containing the pre-reforming catalyst is between 300 and 500 °C, more preferably 330 - 400 °C.

In this alternative embodiment, preferably the catalyst promotes methanation of CO. Thus, for this embodiment, the first and second reactor are combined in one reactor to perform the two steps simultaneously.

The hydrogen manufacturing unit produces a hydrogen comprising mixture. Usually the H₂/CO ratio of the hydrogen comprising mixture is 4:1 till 9:1. Preferably a portion or all of the hydrogen comprising mixture produced by the hydrogen manufacturing unit is used as part of the hydrogen carbon monoxide mixture feed in step (b). This may be effected by for example blending this mixture with the mixture as obtained in step (a) or by directly feeding this mixture to step (b). The purity of the hydrogen may be increased by know processes such as membrane separation, pressure swing absorbers (PSA) or combinations of a membrane unit followed by a PSA.

A portion of the optionally further purified hydrogen comprising mixture, particularly the hydrogen, as obtained in step (c) is preferably used to upgrade the paraffin product as obtained in step (b). More preferably said upgrading comprises hydrogenation, hydroisomerisation and/or hydrocracking, hydrodesulphurisation and catalytic dewaxing. Such upgrading processes as for example illustrated in WO-A-02/070629 in the context of a Fischer-Tropsch process.

If one requires even more hydrogen it is preferred to also use an additional hydrocarbon feedstock as feedstock in step (c). Such an additional hydrocarbon feedstock may be a methane comprising gas, LPG and naphtha. The LPG and naphtha may be derived from a mineral source or may be the LPG and/or naphtha products as isolated and obtained from the paraffin product as obtained in step (b) of the process of the present invention. Examples of methane comprising gasses may be refinery off-gas, coal bed methane or natural gas. Coal bed methane is preferred when the solid carbonaceous feedstock is coal because the coal bed methane is often found in the same location as the coal. The additional methane comprising gas may be subjected to the same hydrogenation type steps as described above if the gas comprises similar components, which require removal prior to feeding the gas to step (c).

In step (a) a solid carbonaceous feedstock is partially oxidated with an oxygen comprising gas. In general, this so-called gasification is carried out by partially combusting the coal with a limited volume of oxygen at a temperature normally between 800 °C and 2000 °C in the absence of a catalyst. If a temperature of between 1050 and 2000 °C is employed, the product gas will contain very small amounts of gaseous side products such as condensable tars, phenols and hydrocarbons. Suitable coals include lignite, bituminous coal, sub-bituminous coal, anthracite coal, and brown coal. Lignites and bituminous coals are preferred. In order to achieve a more rapid and complete gasification, initial pulveriation of the coal is preferred. Particle size is preferably selected so that 70% of the solid coal feed can pass a 200 mesh sieve. The gasification is preferably carried out in the presence of oxygen and steam, the purity of the oxygen preferably being at least 90% by volume, nitrogen, carbon dioxide and argon being permissible as impurities. Substantially pure oxygen is preferred, such as prepared by an air separation unit (ASU). If the water content of the coal is too high, the coal is preferably dried before use. The atmosphere will be maintained reducing by the regulation of the weight ratio of the oxygen to moisture and ash free coal in the range of 0.6 to 11, preferably 0.8 to 1.0. The specific details of the procedures employed form no part of the invention, but those described in U.S Pat. No. 4,350,103 and U.S Pat. No. 4,458,607, incorporated herein by reference, may be employed. Although, in general, it is preferred that the ratio between oxygen and steam be selected so that from 0 to 0.3 parts by volume of steam is present in the reaction one per part by volume of oxygen, the invention is applicable to processes having substantially different ratios of oxygen to steam. The oxygen used is preferably heated before being contacted with the coal, preferably to a temperature of from about 200 to 500 °C.

Step (a) is preferably performed by partial oxidation of a dry mixture of coal particles and a carrier gas with oxygen in a membrane walled gasification reactor. Membrane wall reactors are known and for example described in US-A-2006/0076272. Preferably the hot mixture of hydrogen and carbon monoxide as obtained in the gasification reactor is cooled by direct contacting the hot gas with liquid water, also referred to as a water quench.

The H₂/CO ratio of the gas mixture obtained in step (a) generally about or less than 1, and is commonly about 0.3 - 0.6 for coal-derived syngas. Such a ratio is suited for an iron catalyzed Fischer-Tropsch reaction. Because the low temperature cobalt catalysed Fischer-Tropsch reaction has a higher consumption ratio of between 2.0 and 2.1, additional hydrogen is needed. By conversion of part of the carbon monoxide as present in the gas mixture obtained in step (a) by means of the water gas shift reaction an increased amount of hydrogen is obtained thereby adjusting the H₂/CO ratio of the gas mixture to a value more suited for performing step (b). As explained above part of the hydrogen as prepared in step (c) may also be advantageously be used to modify the H₂/CO ratio of the gas mixture, thereby requiring less of the water gas shift reaction.

The catalytic water shift conversion reaction provides a hydrogen enriched, often highly enriched, syngas, possibly having a H₂/CO ratio above 3, more suitably above 5, preferably above 7, more preferably above 15, possibly 20 or even above. The water shift conversion reaction is well known in the art and is for example described in the earlier referred to WO-A-03035591. Generally, water, usually in the form of steam, is mixed with the syngas to form carbon dioxide and hydrogen. The catalyst used can be any of the known catalysts for such a reaction, including iron, chromium, copper and zinc. Copper on zinc oxide is a known shift catalyst. A very suitable source for the water required in the shift reaction is the product water produced in the Fischer-Tropsch reaction. Preferably this is the main source, e.g. at least 80% is derived from the Fischer-Tropsch process, preferably at least 90%, more preferably 100%. Thus the need of an external water source is minimised. Another preferred source of water is the quench water used to cool the hot gas in step (a) as described above.

The desired ratio of hydrogen and carbon monoxide of the gas mixture to be used in step (b) is preferably controlled by passing only part of the gas obtained in step (a) over the catalytic water shift reaction as described above. In this manner one can target the desired ratio in an efficient manner, independent of the quality, that is the proportions of carbon and hydrogen, of the solid carbonaceous feedstock.

Preferably, the mixture of hydrogen and carbon monoxide of step (a) is passed through a carbon dioxide/hydrogen sulfide (CO₂/H₂S) removal system. The removal system may involve one or more removal units. The CO₂/H₂S removal system preferably uses a physical solvent process, especially methanol or sulfolan, preferably methanol. This process is based on carbon dioxide and hydrogen sulfide being highly soluble under pressure in the solvent, and then being readily releasable from solution when the pressure is reduced as further discussed below. This high pressure system is preferred due to its efficiency, although other removal systems such as using amines are known.

It is preferred to remove at least 80 vol%, preferably at least 90 vol%, more preferably at least 95 vol% and at most 99.5 vol%, of the carbon dioxide present in the optionally catalytically shifted syngas stream. This avoids the build-up of inerts in the Fischer-Tropsch process.

On an industrial scale there are chiefly two categories of absorbent solvents, depending on the mechanism to absorb the acidic components: chemical solvents and physical solvents. Each solvent has its own advantages and disadvantages as to features as loading capacity, kinetics, regenerability, selectivity, stability, corrosivity, heat/cooling requirements etc.

Chemical solvents which have proved to be industrially useful are primary, secondary and/or tertiary amines derived alkanolamines. The most frequently used amines are derived from ethanolamine, especially monoethanol amine (MEA), diethanolamine (DEA), triethanolamine (TEA), diisopropanolamine (DIPA) and methyldiethanolamine (MDEA).

Physical solvents which have proved to be industrially suitable are cyclo-tetramethylenesulfone and its derivatives, aliphatic acid amides, N-methylpyrrolidone, N-alkylated pyrrolidones and the corresponding piperidones, methanol, ethanol and mixtures of dialkylethers of polyethylene glycols.

A well-known commercial process uses an aqueous mixture of a chemical solvent, especially DIPA and/or MDEA, and a physical solvent, especially cyclotetramethylene-sulfone. Such systems show good absorption capacity and good selectivity against moderate investment costs and operational costs. They perform very well at high pressures, especially between 20 and 90 bara.

The physical adsorption process useable in the present invention is well known to the man skilled in the art. Reference can be made to e.g. Perry, Chemical Engineerings' Handbook, Chapter 14, Gas Absorption. The absorption process useable in the present process is a physical process. Suitable solvents are well known to the man skilled in the art and are described in the literature. In the present process the liquid absorbent in the physical absorption process is suitably methanol, ethanol, acetone, dimethyl ether, methyl i-propyl ether, polyethylene glycol or xylene, preferably methanol. The physical absorption process is suitably carried out at low temperatures, preferably between -60 °C and 0 °C, preferably between -30 and -10 °C.

The physical absorption process is carried out by contacting the light products stream in a counter-current upward flow with the liquid absorbent. The absorption process is preferably carried out in a continuous mode, in which the liquid absorbent is regenerated. This regeneration process is well known to the man skilled in the art. The loaded liquid absorbent is suitably regenerated by pressure release (e.g. a flashing operation) and/or temperature increase (e.g. a distillation process). The regeneration is suitably carried out in two or more steps, preferably 3-10 steps, especially a combination of one or more flashing steps and a distillation step.

The regeneration of solvent from the process is also known in the art. Preferably, the present invention involves one integrated solvent regeneration tower.

The gas mixture of step (a) may also be passed over additional removal systems, guards or scrubbing units, either as back-up or support to the CO₂/H₂S removal system, or to assist in the reduction and/or removal of other contaminants such as HCN, NH₃, COS and H₂S, metals, carbonyls, hydrides or other trace contaminants.

The Fischer-Tropsch synthesis of step (b) is well known to those skilled in the art and involves synthesis of hydrocarbons from a gaseous mixture of hydrogen and carbon monoxide, by contacting that mixture at reaction conditions with a Fischer-Tropsch catalyst.

Products of the Fischer-Tropsch synthesis may range from methane to heavy paraffinic waxes. Preferably, the production of methane is minimised and a substantial portion of the hydrocarbons produced have a carbon chain length of a least 5 carbon atoms. Preferably, the amount of C5+ hydrocarbons is at least 60% by weight of the total product, more preferably, at least 70% by weight, even more preferably, at least 80% by weight, most preferably at least 85% by weight.

Fischer-Tropsch catalysts are known in the art, and typically include a Group VIII metal component, preferably cobalt, iron and/or ruthenium, more preferably cobalt. Typically, the catalysts comprise a catalyst carrier. The catalyst carrier is preferably porous, such as a porous inorganic refractory oxide, more preferably alumina, silica, titania, zirconia or mixtures thereof.

The optimum amount of catalytically active metal present on the carrier depends inter alia on the specific catalytically active metal. Typically, the amount of cobalt present in the catalyst may range from 1 to 100 parts by weight per 100 parts by weight of carrier material, preferably from 10 to 50 parts by weight per 100 parts by weight of carrier material.

The catalytically active metal may be present in the catalyst together with one or more metal promoters or cocatalysts. The promoters may be present as metals or as the metal oxide, depending upon the particular promoter concerned. Suitable promoters include oxides of metals from Groups IIA, IIIB, IVB, VB, VIB and/or VIIB of the Periodic Table, oxides of the lanthanides and/or the actinides. Preferably, the catalyst comprises at least one of an element in Group IVB, VB and/or VIIB of the Periodic Table, in particular titanium, zirconium, manganese and/or vanadium. As an alternative or in addition to the metal oxide promoter, the catalyst may comprise a metal promoter selected from Groups VIIB and/or VIII of the Periodic Table. Preferred metal promoters include rhenium, platinum and palladium.

A most suitable catalyst comprises iron as this catalyst is suited for the lower hydrogen to carbon monoxide ratio as typically obtained in step (a). However by performing the process according to the present invention it also becomes possible to use cobalt based Fischer-Tropsch catalyst, which require a higher hydrogen to carbon monoxide ratio. A most suitable catalyst comprises cobalt as the catalytically active metal and zirconium as a promoter. Another most suitable catalyst comprises cobalt as the catalytically active metal and manganese and/or vanadium as a promoter.

The promoter, if present in the catalyst, is typically present in an amount of from 0.1 to 60 parts by weight per 100 parts by weight of carrier material. It will however be appreciated that the optimum amount of promoter may vary for the respective elements which act as promoter. If the catalyst comprises cobalt as the catalytically active metal and manganese and/or vanadium as promoter, the cobalt : (manganese + vanadium) atomic ratio is advantageously at least 12:1.

The Fischer-Tropsch synthesis is preferably carried out at a temperature in the range from 125 to 350 °C, more preferably 175 to 275 °C, most preferably 200 to 260 °C. The pressure preferably ranges from 5 to 150 bar abs., more preferably from 5 to 80 bar abs.

Hydrogen and carbon monoxide (synthesis gas) is typically fed to the three-phase slurry reactor at a molar ratio in the range from 0.4 to 2.5. Preferably, the hydrogen to carbon monoxide molar ration is in the range from 1.0 to 2.5.

The gaseous hourly space velocity may very within wide ranges and is typically in the range from 1500 to 10000 Nl/l/h, preferably in the range from 2500 to 7500 Nl/l/h.

The Fischer-Tropsch synthesis is preferably carried out in multi-tubular reactor, or in a slurry phase regime or an ebullating bed regime, wherein the catalyst particles are kept in suspension by an upward superficial gas and/or liquid velocity.

It will be understood that the skilled person is capable to select the most appropriate conditions for a specific reactor configuration and reaction regime.

Preferably, the superficial gas velocity of the synthesis gas is in the range from 0.5 to 50 cm/sec, more preferably in the range from 5 to 35 cm/sec.

Typically, the superficial liquid velocity is kept in the range from 0.001 to 4.00 cm/sec, including liquid production. It will be appreciated that he preferred range may depend on the preferred mode of operation.

Without wishing to be restricted to a particular embodiment, the invention will now be described in further detail with reference to the accompanying drawing in which:
Fig. 1 is a schematic diagram of one embodiment of the invention;
Fig. 2 is a schematic diagram of an alternative embodiment of the invention;

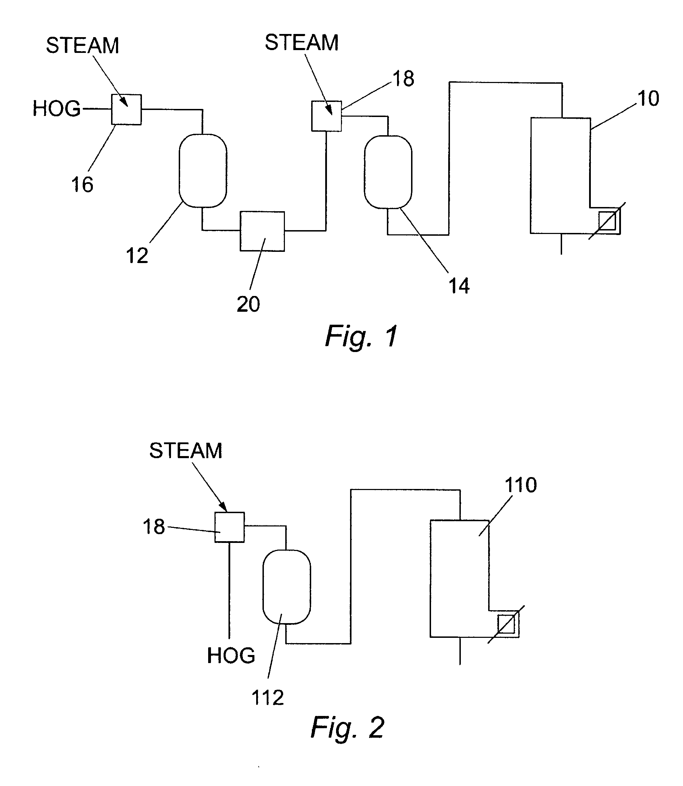

Fig. 1 shows the layout of a heavy paraffinic synthesis(HPS)-off-gas recycling process and comprises a first hydrogenation reactor 12 connected in series to a second, high temperature shift(HTS) reactor 14 which is in turn connected to a steam reformer 10.

A steam mixer 16/18 is provided upstream of each of the first and second reactors 12, 14 to add steam into the respective reactors 12, 14. A heater 20 is provided between the first 12 and second 14 reactors in order to increase the heat of the mixture flowing therebetween.

The configuration is utilised to convert coking causing species present in off-gas recovered from a Fischer-Tropsch reactor (not shown) to species which do not cause coking. Such off-gas is also referred to as HPS-off-gas or HOG. It will hereinafter be referred to as HOG.

The hydrogenation reactor 12 is provided with a catalyst which is capable of hydrogenating olefins in the presence of CO - some catalysts would be deactivated in the presence of CO. Moreover, other catalysts are also less suitable because they would hydrogenate the CO and CO₂ present in the off-gas mixture, creating exotherms which would require cooling mechanisms to control. Some suitable catalysts are discussed further below.

A small amount of steam from steam input 16 may be mixed with the HOG before hydrogenation of the olefins. The steam suppresses Boudouard carbon formation (as per reaction (1) below) and therefore helps minimise deactivation of the catalyst.

2CO □ C + CO₂ (1)

As well as hydrogenation, the shift reaction may also occur in the reactor 12 according to reaction (2) below.

CO + H₂O □ CO₂ + H₂ (2)

The treated HOG with reduced olefinic content proceeds to the second reactor 14 optionally via the heater 20. The heater 20 raises the temperature of the treated HOG which exits the reactor 12 at 200-300 °C and enters the second reactor 14 at 300-400 °C.

In the second reactor 14, carbon monoxide is converted into carbon dioxide via the shift reaction (2). Steam is mixed with the treated HOG to provide sufficient H₂O molecules for the shift reaction (2) to proceed and to suppress Boudouard carbon formation. As some of the CO will already be oxidised in the reactor 12, the workload of this reactor 14 is reduced. Naphtha present in the off-gas may also be broken down in the reactor 14.

The catalyst in the second reactor 14 can be any suitable high temperature shift catalyst. An Fe/Cr catalyst is preferred at the high temperatures used in reactor 14 because the temperature is normally too high for Cu/Zn low temperature shift catalysts which operate at a maximum 270-300 °C.

The further treated HOG from the reactor 14 is then fed into the steam reformer 10. The absence of olefins in the treated off-gas and, in this embodiment, the absence of CO and C₂₊ reduces or eliminates carbon deposits on the tubes leading to the steam reformer 10 and on the catalyst therein.

In the steam reformer 10, paraffins, particularly methane, are converted into hydrogen and carbon monoxide, according to reactions (3) and (4) below. (Other minor reactions also take place.) The input temperature of the steam reformer 10 is around 500 °C which rises to an output temperature of around 800-950 °C.

CH₄ + H₂O □ CO + 3H₂ (3)

CH₄ + 2H₂O □ CO₂ + 4H₂ (4)

The reactions in the steam reformer 10 produce synthesis gas (i.e. a mixture of H₂ and CO) with a H₂/CO ratio of between 5-7. The CO₂ produced is recovered by conventional means (not shown).

Synthesis gas produced by way of the Shell gasification process (5) results in a H₂/CO ratio of about 1.6 to 1.8. A comprehensive survey of this process can be found in the Oil and Gas Journal, September 6, 1971, pages 68-90.

CH₄ + O₂ □ CO + H₂O + H₂ 2CH₄ + O₂ □ 2CO + 4H₂ CO + H₂O □ CO₂ + H₂ (5)

The combination of the three reactions (5) results in a H₂/CO ratio of 1.6 - 1.8. Thus to provide the preferred H₂/CO ratio of 2.05 the synthesis gas from the steam reformer 10 can be blended with the synthesis gas from the Shell gasification process to produce the required H₂/CO ratio for onward Fischer-Tropsch reactions. The hydrogen may also be utilised for the hydrogenation and hydroconversion of Fischer-Tropsch products.

The steam reformer 10 comprises a plurality of reactor tubes (not shown) and a furnace in which to heat the tubes. The input temperature of the mixture added thereto is around 500 °C but can range from 450-630 °C and the output temperature is around 860 °C but can range from 750-900 °C. It generates the syngas mixture by the steam reforming mechanism (described above) rather than partial oxidation.

Lead catalysts are known for their use in hydrogenation and were considered for use in the reactor 12. However, lead catalysts absorb the CO present in the HOG, which causes deactivation of the catalysts and so they are not preferred. Other hydrogenation catalysts were also considered but were not suitable since they would cause hydrogenation of CO and CO₂ which is not desired.

Copper on zinc oxide is known as a shift catalyst and the skilled person typically attempts to minimise any hydrogenation which occurs using this catalyst. However it has surprisingly been found that such a shift catalyst can hydrogenate olefins in the presence of steam. Various CuO/ZnO catalysts were investigated for their suitability to catalyse the hydrogenation reaction taking place in reactor 12. These catalysts are commercially available. e.g. from Sued Chemie (Munich, Germany). Similar catalysts are available from Johnson Matthey and Haldor Topsoe.

These catalysts, which are similar in chemical composition, are tuned for optimal performance in their specific area of application by addition of different promoters. Catalysts A and B are intended for operation in wet gas, and it is understood that Cs is added to suppress methanol formation. Catalyst C operates in relatively dry gas, and makes methanol. Catalyst D operates in dry gas, and it is understood that Mn is added to promote hydrogenation.

Small scale laboratory tests (+/- 10 cc of catalyst) were carried out. The feed gas, a synthetic HOG, included 2%v ethylene and 0.8%v hexene. Steam was added to suppress Boudouard carbon formation (as per reaction (1) above). It should be noted that these catalysts, in addition to their hydrogenation activity are also catalysing the CO shift reaction (2).

CO + H₂O □ CO₂ + H₂ (2)

Since a shift conversion step is a desired reaction in making HPS off-gas suitable as steam reformer feedstock, this type of catalyst has the advantage that it could remove part of the carbon monoxide as well as hydrogenate the olefins.

All catalysts showed good results. The tests showed catalyst C to exhibit the lowest activity. Catalyst D showed slightly better activity than catalysts B and C; catalyst D also retained the best crushing strength.

On the basis of these initial tests, a longer duration test of almost 500 hours was carried with catalyst D. The test was carried out at a pressure of 30 bar; the reactor inlet temperature was 200 °C, steam/gas molar ratio 0.6. The reactor exit temperature was approx. 320 °C, representing a temperature rise across the reactor of 120 °C (heater settings were adjusted to get an exit temperature which corresponds to the temperature rise to be expected in an adiabatic reactor due to the exothermic shift and hydrogenation reactions). The feed gas used during this test is shown in table 1 below.

**Table 1**

| Feed gas range employed during test | % vol |
|---|---|
| H₂ + CO | 19.3 - 22.4 |
| CO₂ | 37.1 - 38.0 |
| CH₄ | 33.3 - 34.5 |
| N₂ | 6.1 - 6.8 |
| ethene | 2.0 |
| hexene | 0.8 |

The results after 483 hours are shown in table 2 below.

**Table 2**

| Catalyst | Catalyst D 4.5. x 4.5 mm tablets |
|---|---|
| GHSV (dry) Nl/l/hr | 4000 |
| steam/gas ratio | 0.6 |
| initial ethene conversion | 100 |
| final ethene conversion | 97 |
| initial hexene conversion | 98 |
| final hexene conversion | 95 |
| initial CO conversion | 95 |
| final CO conversion | 92 |

Inspection after the test showed the catalyst to be in excellent condition. Thus the use of the CuO/ZnO catalyst D is preferred, although catalysts B and C can also be used.

Tests were also done with a small reactor (+/- 100 cc catalyst) in a bypass line of a commercial plant, using catalyst D, on a real HOG feed. This was successfully tested for over 2000 hours thus confirming the above results.

The catalyst is sold as CuO/ZnO, and the copper is reduced to Cu in the reactor during the start up procedure. Ni, Ni/W, and Co/Mo based catalysts are also suitable. Pd on alumina was tried, but this catalyst was less suitable because of CO poisoning. Alternatively sulfided NiMo may be used, but this requires an additional sulphur removal step downstream and so this catalyst is less preferred.

A second embodiment of the invention is shown in Fig. 2.

In this embodiment the olefins are hydrogenated and the carbon monoxide methanised in the same reactor, that is a reactor 112. A Ni/Al₂O₃ catalyst may be utilised such as commercially available catalysts from Sued Chemie, Munich, Germany or equivalent pre-reformer catalysts from Johnson Matthey (formerly Synetix) and Haldor Topsoe. The preferred catalysts have a nominal weight content set out in table 3.

**Table 3**

| Constituent | Proportion (Nvt%) Sued Chemie Products | Proportion (Nvt%) Johnson Matthey product |
|---|---|---|
| NiO | 50-60 | 45-50 |
| MgO | 5-15 | 3.3 |
| SiO₂ | 3-7 | 4.2 |
| K₂O | | 0.5 |
| Cr₂O₃ | | 1.5 |
| CaO | | 7.8 |
| Al₂O₃ | 5-15 | balance |

These catalysts are known for use as pre-reforming catalysts to convert C₂+ to methane at a temperature of around 450 °C. However, in this application the catalyst has been found to also hydrogenate olefins at a lower temperature, around 350 °C at the reactor 112 inlet. The catalyst also cracks larger paraffins. Carbon monoxide and hydrogen from the shift reaction (2) react further to produce methane. The reactions are summarised below (6).

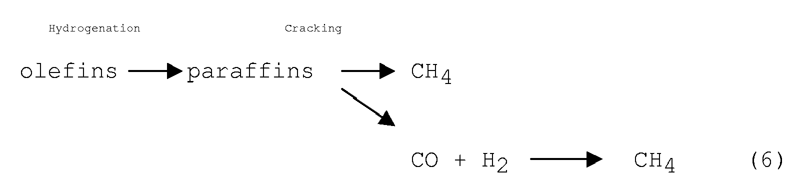

Fig. 4 shows the CO conversion over this catalyst plotted as a function of the time. The graph shows a very high conversion during the test although the results show that CO conversion has not stabilised.

Another suitable catalyst would be noble metal based, for example iron or cobalt catalysts (e.g. CoMo), or nickel based catalysts, for example NiMo, TiW. Other catalysts, for example (pre-) reforming catalysts using Pt, Ru, Rh, etc. or combinations thereof are also suitable.

In use, the HOG is recovered from the Fischer-Tropsch reactor (not shown) and fed into the reactor 112. Steam is also injected from a steam input 118. The HOG gas enters the reactor 114 at a temperature of around 350 °C. Olefins present in the HOG are hydrogenated and the resulting paraffins are either cracked to form methane or converted to CO and H₂ and onwards to methane as detailed in reaction (6) above. The treated off-gas exits the reactor 114 at a temperature of around 500 °C.

The refined off-gas then proceeds to a steam reformer 110 for conversion to syngas. The resulting syngas is blended with syngas from the Shell gasification process to provide the preferred ratios of CO/H₂ and then fed back into the Fischer-Tropsch reactor as detailed above with respect to the first embodiment.

Thus the present invention allows HOG to be recycled, for example to the steam reformer rather than flared off.

Embodiments of the present invention also prevent or mitigate coking and subsequent deactivation of the catalyst used in the steam reformer.

An advantage of certain embodiments of the present invention is that longer chain paraffins are not introduced into the steam reformer. Therefore the steam reformer catalyst does not suffer from coking caused by the ethylene produced by cracked hydrocarbons.

A further advantage of certain embodiments of the invention is that CO is not hydrogenated and therefore facilities are not required to cope with the exotherms resulting from such hydrogenation.

An advantage of the Fig. 2 embodiment of the present invention is that the treatment to remove or reduce the coking causing species is performed in a single reactor rather than two separate reactors.

The above process describes a preferred use of the process as claimed in claim 1 of the present invention, as well as the dependent claims. The invention also relates to the hydrocarbon product which can be made from the Fischer-Tropsch synthesis product as obtained in step (b), including the products obtained by hydrogenation, hydroisomerisation and/or hydrocracking of the directly obtained products in the process optionally followed by a dewaxing step. Examples of such products are naphtha, kero, gas oil, waxy raffinate, base oils and wax.

## Claims

1. Process for preparing a paraffin product from a solid carbonaceous feedstock comprising the following steps,
(a) partial oxidation of the solid carbonaceous feedstock to obtain a mixture comprising hydrogen and carbon monoxide,
(b) performing a Fischer-Tropsch reaction using the mixture as obtained in step (a) and recovering an off-gas from the Fischer-Tropsch reaction and a paraffin product and
(c) preparing a hydrogen comprising gas from the off-gas.

2. Process according to claim 1, wherein the olefins as present in the off-gas are hydrogenated prior to performing step (c).

3. Process as claimed in claim 2, wherein the carbon monoxide present in said off-gas is removed or converted either prior to, simultaneous with or after the olefin hydrogenation step.

4. Process as claimed in claim 3, wherein the carbon monoxide is converted into a species which is not liable to cause carbon deposition, for example carbon dioxide or methane.

5. Process as claimed in any one of claims 1-4, wherein the hydrogen containing mixture is prepared by means of steam reforming.

6. Process as claimed in any preceding claim, wherein the olefin hydrogenation is carried out in a first reactor using a catalyst or catalysts selected from the group consisting of copper, especially copper/zinc oxide, nickel, nickel/tungsten, cobalt/molybdenum and sulfided nickel/molybdenum.

7. Process as claimed in claim 6, wherein the hydrogenation is carried out using a copper, especially copper/zinc oxide, catalyst in the first reactor.

8. Process as claimed in claim 6 or 7, wherein the carbon monoxide is removed or converted in a second reactor using a shift catalyst.

9. Process as claimed in claim 8, wherein the shift catalyst is selected from the group consisting of nickel/cobalt and iron/chromium based systems, preferably an iron/chromium based catalyst.

10. Process as claimed in any one of claims 2 to 5, wherein the hydrogenation uses a pre-reformer catalyst at a temperature suitable to promote hydrogenation of unsaturated molecules as well as converting carbon monoxide by reaction with water into carbon dioxide and hydrogen.

11. Process as claimed in claim 10, wherein the input temperature of a reactor containing the pre-reformer catalyst is between 300 and 500 °C, more preferably 330 - 400 °C.

12. Process according to any one of claims 1-11, wherein the hydrogen comprising mixture as obtained is used to upgrade the paraffin product as obtained in step (b).

13. Process according to claim 12, wherein said upgrading comprises hydrogenation, hydroisomerisation and/or hydrocracking, hydrodesulphurisation and catalytic dewaxing.

14. Process according to any one of claims 1-11, wherein the hydrogen containing mixture as obtained is used as part of the hydrogen carbon monoxide mixture used as feed in step (b).

15. Process according to any one of claims 1-14, wherein in step (c) also an additional methane comprising gas is used as feedstock.

16. Process according to claim 15, wherein the methane comprising gas is coal bed methane.

17. Process according to any one of claims 1-16, wherein the solid carbonaceous feedstock is selected from the group consisting of biomass, coal, brown coal, peat, petroleum coke, coke and soot and mixtures thereof.

18. Process according to claim 17, wherein the solid carbonaceous feedstock is coal.

19. Process according to claim 18, wherein the step (a) is performed by partial oxidation of a dry mixture of coal particles and a carrier gas with oxygen in a membrane walled gasification reactor.

20. Process according to claim 19, wherein the hot mixture of hydrogen and carbon monoxide as obtained in the gasification reactor is cooled by direct contacting the hot gas with liquid water.

21. Process according claim 20, wherein the gas as obtained comprising water, hydrogen and carbon monoxide is subjected to a water shift conversion reaction.
